# EUROPÄISCHE PATENTSCHRIFT

(11) **EP 1 619 463 B1**
(45) Veröffentlichungstag und Bekanntmachung des Hinweises auf die Patenterteilung: **10.01.2007**
(21) Anmeldenummer: 05010194.8
(22) Anmeldetag: 11.05.2005
(51) Int. Cl.: G01B 5/012

(54) **Tastkopf**
Probe Head
Tête de palpage

(30) Priorität: 23.07.2004 DE 102004035926
(43) Veröffentlichungstag der Anmeldung: 25.01.2006
(73) Patentinhaber: Dr. Johannes Heidenhain GmbH, 83292 Traunreut (DE)
(72) Erfinder: Schopf, Reinhold, 83308 Trostberg (DE)

(56) Entgegenhaltungen:
- EP-A- 0 742 422
- DE-A1- 10 042 715
- US-A- 5 669 152

## Beschreibung

Die Erfindung betrifft einen Tastkopf, der einen mechanischen Anschlag für ein Tastelement aufweist, gemäß dem Oberbegriff des Anspruchs 1.

Ein Tastsystem umfasst in der Regel einen mobilen Tastkopf und ein stationäres Teil. Der Tastkopf in Form eines Tastschalters bzw. eines schaltenden Tasters mit einem auslenkbaren Tastelement, insbesondere einem Taststift, der bei einer Auslenkung aus seiner Ruheposition ein Schaltsignal abgibt, wird insbesondere zur Positionsbestimmung von Werkstücken verwendet, die in materialbearbeitenden Maschinen, beispielsweise Werkzeugmaschinen, eingespannt sind. Unter der Ruheposition des Taststifts wird dabei eine Position verstanden, in welcher der Taststift keinen Kontakt mit dem anzutastenden Werkstück hat. Bei einem Kontakt des Taststifts mit dem Werkstück wird der Taststift aus seiner Ruheposition ausgelenkt und es wird mittels eines geeigneten Wandlers ein elektrisches Signal erzeugt, wenn die Auslenkung eine vorgegebene Tastschwelle überschreitet. Das elektrische Signal wird dann häufig in ein Infrarot-Signal umgewandelt, so dass auf diese Weise eine berührungs- und kabellose Signalübertragung an das stationäre Teil des Tastsystems erreicht wird.

Damit bei einer weiteren, unbeabsichtigten, Bewegung des Tastkopfes unzulässige Bewegungswege des Tastelements unterbunden werden, sind häufig innerhalb des Gehäuses derartiger Tastköpfe mechanische Anschläge als Schutzvorrichtungen vorgesehen (siehe beispielsweise EP 0 742 422 A1).

Aus der DE 10042715 A1 ist ein Tastkopf der eingangs genannten Art bekannt, dessen Taststift eine Sollbruchstelle aufweist, um die Belastungen für den Tastkopf bei einer unkontrollierbaren Kollision zu begrenzen. Eine entsprechende Anordnung hat aber den Nachteil, dass übermäßige Krafteinleitungen in Richtung der Längsachse des Taststifts nicht sicher abgefangen werden können.

In der EP 0 126 207 B1 ist ein Tastkopf beschrieben, dessen Belastungen infolge einer unkontrollierten Kollision in Richtung der Längsachse des Taststifts reduziert wird, indem der Taststift zweigeteilt ausgeführt ist, wobei die aneinander grenzenden Flächen der Teile des Taststifts abgeschrägt sind. Die Bauweise hat unter anderem den Nachteil, dass derartige Taststifte relativ aufwändig herzustellen sind.

Der Erfindung liegt daher die Aufgabe zu Grunde, einen vergleichsweise einfach herstellbaren Tastkopf der eingangs genannten Art zu schaffen, welcher unempfindlich gegenüber unkontrollierten Kollisionen ist, insbesondere wenn eine Kollisionsrichtung parallel zur Längsachse des Tastelements vorliegt.

Diese Aufgabe wird erfindungsgemäß durch die Merkmale des Anspruches 1 gelöst.

Gemäß der Erfindung umfasst der Tastkopf ein Gehäuse an dem ein mechanischer Anschlag mit Widerlagerpunkten des Gehäuses angeordnet ist, und ein Tastelement, das ebenfalls Anschlagflächen aufweist. Zur Wegbegrenzung des Tastelements ist das Tastelement aus einer Ruheposition entlang (bzw. parallel zu) seiner Längsachse in eine Anschlagposition relativ zum Gehäuse verschiebbar. Bei genügend großer Verschiebung berühren die Anschlagflächen des Tastelements die Widerlagerflächen des Gehäuses an Anschlagpunkten. In der Ruheposition kann eine geometrische Ebene orthogonal zur Längsachse des Tastelements aufgespannt werden. Die Anschlagpunkte sind räumlich so angeordnet, dass in der Anschlagposition die Längsachse des Tastelements die besagte geometrische Ebene in einem schiefen Winkel schneidet.

Unter einem schiefen Winkel ist ein Winkel zu verstehen, der dadurch entsteht, wenn die Längsachse nicht orthogonal die betreffende Ebenen durchdring. Mit anderen Worten ist dann der als schiefer Winkel bezeichnete Schnittwinkel zwischen der Längsachse und der geometrischen Ebene ungleich 90°.

Durch die beschriebene Konstruktion kann die Belastung für den Tastkopf signifikant reduziert werden, wenn eine unkontrollierte Kollision bei einer Bewegung parallel zur Längsachse des Tastelements (bezogen auf dessen Ausrichtung in der Ruheposition) eintritt. Es wird nämlich in diesem Fall ein Biegemoment bzw. eine erhöhte Knickspannung in das Tastelement, bzw. den Taststift eingeleitet. Entsprechend sind nunmehr reproduzierbar, im Vergleich zu der Knickbelastung bei herkömmlichen Tastelementen, reduzierte Soll-Bruchkräfte erreichbar.

Mit Vorteil ist, stereometrisch beschrieben, der Tastkopf derart ausgebildet, dass durch die Anschlagpunkte des mechanischen Anschlags des Gehäuses eine geometrische Ebene aufspannbar ist, welche von der Längsachse in der Ruheposition des Tastelements in einem schiefen Winkel geschnitten wird.

Alternativ dazu kann gemäß einer bevorzugten Ausführungsform aber auch der Tastkopf so gestaltet sein, dass diejenige geometrische Ebene, die durch die Anschlagpunkte des Tastelements aufspannbar ist, von der Längsachse des Tastelements in einem schiefen Winkel geschnitten wird. Bei dieser alternativen Ausgestaltung der Erfindung ist also die Ebene in der die Anschlagpunkte des Tastelements zu liegen kommen, bezüglich der Längsachse des Tastelements schief im Raum. Die Erfindung umfasst aber auch Anordnungen bei der sowohl die Ebene der Widerlagerpunkte als auch die Ebene der Anschlagpunkte bezüglich der Längsachse des Tastelements in der Ruheposition schief im Raum zu liegen kommen.

Mit Vorteil weist auch das Gehäuse eine Längsachse auf, wobei diese Längsachse in der Ruheposition parallel zur Längsachse des Tastelements ausgerichtet ist. In der Anschlagposition ist dann allerdings die Längsachse des Tastelements relativ zur Längsachse des Gehäuses geschwenkt.

Insbesondere kann die Erfindung mit Vorteil in Verbindung mit Tastelementen mit einer Sollbruchstelle angewendet werden. In einer bevorzugen Ausgestaltung der Erfindung umfasst das Tastelement einen Taststifthalter und einen am Taststifthalter lösbar befestigten Taststift. Der Taststift oder der Taststifthalter können dann mit einer Sollbruchstelle versehen sein. Dabei ist es vorteilhaft, wenn die Sollbruchstelle etwa in der Mitte des Tastelements (bezogen auf dessen Längsachse) angeordnet ist, weil dann im Bereich der Sollbruchstelle die größten mechanischen Spannung vorliegen.

Dasjenige Ende des Taststifts das zur Antastung an beispielsweise ein Werkstück bestimmt ist, wird im Folgenden als Tastende bezeichnet. In weiterer Ausgestaltung der Erfindung ist der Abstand der Sollbruchstelle vom Tastende größer als die halbe freie Länge des Taststifts, mit Vorteil größer als 2/3 der freien Länge des Taststifts. Auf diese Weise wird die Sollbruchstelle in einen Bereich verlegt, in dem vergleichsweise große Belastungen im Tastelement auftreten, so dass ein sicherer Überlastschutz gewährleistet ist.

Mit Vorteil können auch Taststifte in Kombination mit der Erfindung eingesetzt werden, die aus einem vergleichsweise spröden Keramikwerkstoff bestehen. Bei derartigen Taststiften kann dann auf eine spezielle Sollbruchstelle verzichtet werden.

Vorteilhafte Ausbildungen der Erfindung entnimmt man den abhängigen Ansprüchen.

Weitere Einzelheiten und Vorteile des erfindungsgemäßen Tastkopfes ergeben sich aus der nachfolgenden Beschreibung eines Ausführungsbeispieles anhand der beiliegenden Figuren.

Es zeigen die
- Figur 1 a: eine Draufsicht auf den Tastkopf,
- Figur 1b: eine Schnittdarstellung durch den Tastkopf in Ruheposition entlang der Schnittlinie C -C in Fig. 1 a,
- Figur 2a: eine perspektivische Ansicht einer Kappe des Tastkopfes,
- Figur 2b: eine weitere perspektivische Ansicht einer Kappe des Tastkopfes,
- Figur 3: eine perspektivische Ansicht eines Stifthalters eines Tastelements,
- Figur 4: eine Schnittdarstellung durch den Tastkopf in Anschlagposition entlang der Schnittlinie C -C in Fig. 1 a.

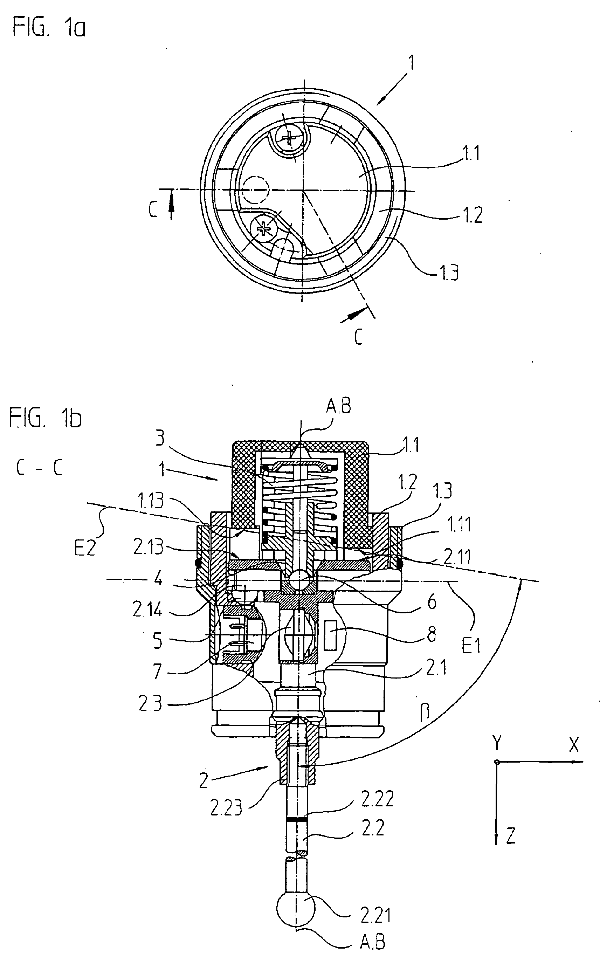

In der Figur 1 a ist die Draufsicht auf einen Tastkopf gezeigt. Insbesondere ist in der Figur 1a die zu einem Gehäuse 1 gehörende Kappe 1.1 dargestellt.

Die Figur 1 b zeigt eine Ansicht des Tastkopfes in Ruheposition, gemäß dem Schnitt C - C in der Figur 1a. Neben der Kappe 1.1, umfasst demnach das Gehäuse 1 noch zwei weitere Gehäuseteile 1.2, 1.3. Aus dem unteren Bereich des Gehäuses 1 ragt ein Tastelement 2. Das Tastelement 2 weist eine Längsachse A auf, welche im Ruhezustand bzw. in der Ruheposition gleichzeitig die Längsachse B des Gehäuses 1 darstellt. Im vorgestellten Ausführungsbeispiel umfasst das Tastelement 2 zwei Teile, nämlich einen Stifthalter 2.1 und einen Taststift 2.2, an dem in der Figur 1 b unten als Taststiftende eine Antastkugel 2.21 abgebracht ist. Der Taststift 2.2 weist ferner eine Sollbruchstelle 2.22 auf. Stifthalter 2.1 und Taststift 2.2 sind durch eine Schraubverbindung 2.23 lösbar miteinander verbunden.

In der Ruheposition kann eine geometrische Ebene E1 aufgespannt werden, die orthogonal zur Längsachse A des Tastelements 2 liegt, wobei in der Figur 1b diese Ebene E1 auch senkrecht zur Zeichenebene ausgerichtet ist und daher dort als einfache Strichlinie darstellbar ist. Der Normalenvektor der Ebene E1 liegt also parallel zur Längsachse A des Tastelements 2 in der Ruheposition.

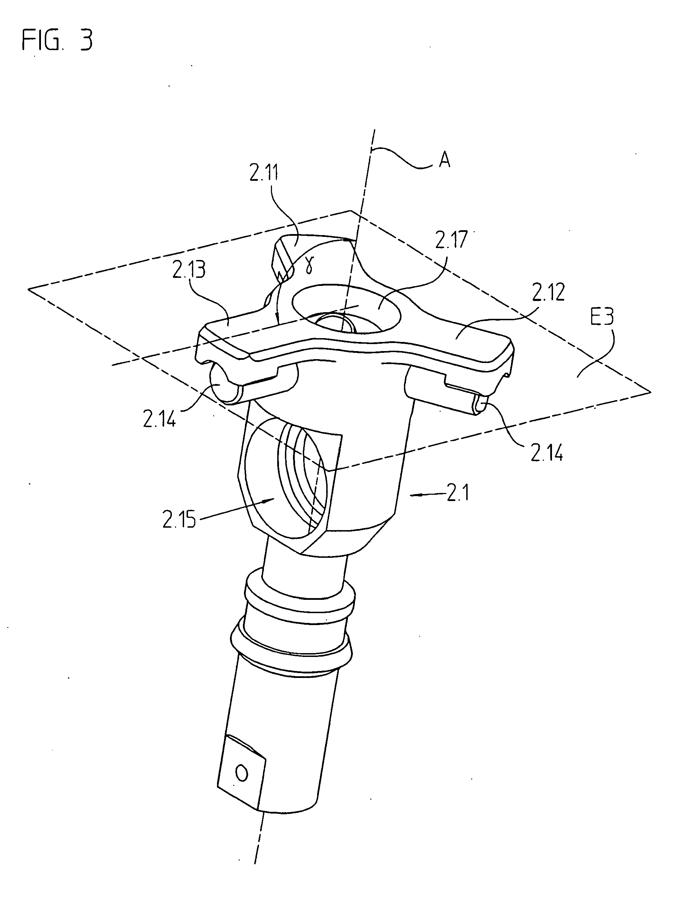

Gemäß der Figur 3 weist der Stifthalter 2.1 des Tastelements 2 an einem Ende drei Arme auf. An der Oberseite eines jeden Armes ist jeweils eine Anschlagfläche 2.11 bis 2.13 dargestellt, deren Funktion weiter unten erläutert wird. Die Anschlagflächen 2.11 bis 2.13 befinden sich auf einer Ebene E3, welche hier orthogonal zur Längsachse A des Tastelements 2 liegt. Die Längsachse A des Tastelements 2 schneidet also im vorgestellten Ausführungsbeispiel die geometrische Ebene E3 in einem Winkel γ = 90°.

An der Oberseite des Stifthalters 2.1 ist darüber hinaus auch eine zentrische Ausnehmung 2.17 vorgesehen. An der Unterseite der drei Arme befindet sich jeweils ein sogenannter Auflagezylinder 2.14. Ferner umfasst der Stifthalter 2.1 eine Bohrung 2.15 in der ein Linsensystem 2.3 befestigt wird, welches in der Figur 3 nicht dargestellt ist (siehe hierzu die Figur 1 b).

Die drei Auflagezylinder 2.14 lagern, gemäß der Figur 1b, in der Ruheposition des Tastkopfes auf jeweils zwei Kugeln 5. Die Kugeln 5 stützen sich gegenüber dem Gehäuseteil 1.2 ab. Damit das Tastelement 2 in seiner Ruheposition bleibt, wird dieses durch eine Feder 3 über ein Zwischenstück 4 und eine Zentrierkugel 6 letztlich an das Gehäuse 1 gedrückt. Dabei ruht die Zentrierkugel 6 in der Ausnehmung 2.17 und befindet sich also zwischen dem Stifthalter 2.1 des Tastelements 2 und dem Zwischenstück 4. Das in der Figur 1 b obere Ende der Feder 3 stützt sich demnach an der Kappe 1.1 ab, wogegen das untere Ende der Feder 3 auf das Zwischenstück 4 und somit auf das Tastelement 2 drückt.

Eine Auslenkung des Tastelements 2 aus seiner Ruheposition wird durch eine optisch wirkende Vorrichtung festgestellt. Im Gehäuse 1 ist demzufolge eine Lichtquelle 7 vorgesehen, die Licht emittiert, welches im Wesentlichen senkrecht zur Längsachse A des Tastelements 2 austritt. Das emittierte Licht gelangt dann in ein Linsensystem 2.3, welches innerhalb der Bohrung 2.15 im Stifthalter 2.1 des Tastelements 2 angebracht ist. Das aus dem Linsensystem 2.3 austretende Licht trifft danach auf ein Fotoelement 8, welches im gezeigten Ausführungsbeispiel als Differentialfotoelement ausgestaltet ist.

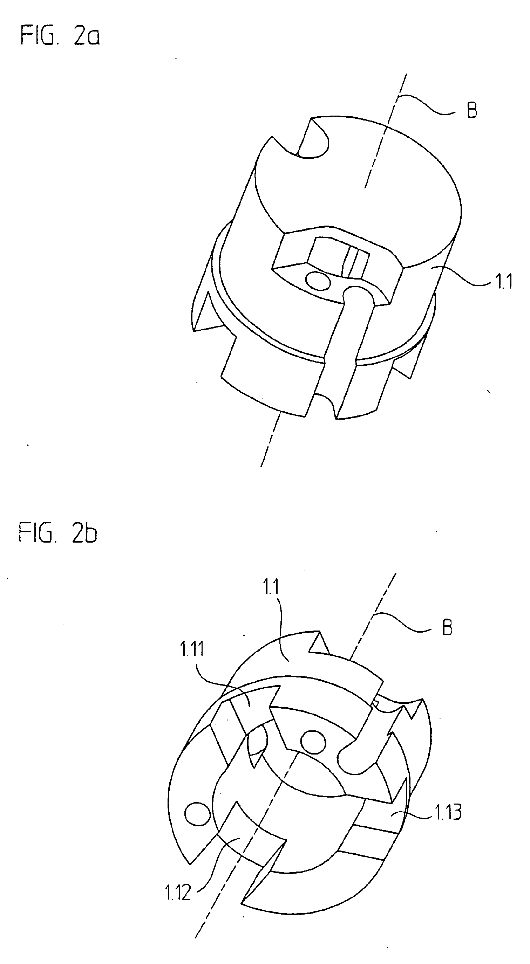

In den Figuren 2a und 2b sind perspektivische Ansichten der Kappe 1.1 gezeigt, welche dem Gehäuse 1 zuzuordnen ist. Die Kappe 1.1 weist drei, entlang des Umfangs um jeweils 120° versetzt angeordnete Ausnehmungen auf. Die Stirnseiten der Ausnehmungen bilden Widerlagerflächen 1.11 , 1.12, 1.13. Dabei sind zwei Ausnehmungen in axialer Richtung der Kappe gleich tief vorgenommen, während die dritte Ausnehmung in axialer Richtung tiefer eingearbeitet ist. Mit anderen Worten befinden sich zwei Widerlagerflächen 1.11, 1.12 auf gleicher Höhe, während die dritte Widerlagerfläche 1.13 gegenüber den ersten beiden Widerlagerflächen 1.11, 1.12 axial versetzt angeordnet ist. Die Widerlagerflächen 1.11 , 1.12, 1.13 sind selbstredend wie auch die gesamte Kappe 1.1 unverschieblich, bzw. ortsfest, relativ zum Gehäuse 1 angeordnet.

Im Messbetrieb wird der Tastkopf beispielsweise innerhalb des Bearbeitungsraumes einer Werkzeugmaschine in Richtung der X-Achse verfahren. Sobald die Antastkugel 2.21 ein Hindernis - etwa ein zu vermessendes Werkstück - berührt, wird das gesamte Tastelement 2 ausgelenkt. Das heißt, dass entgegen der Kraft der Feder 3 zumindest einer der Auflagezylinder 2.14 leicht abhebt und durch die Neigung der Längsachse A des Tastelements 2 auch das Linsensystem 2.3 geneigt wird. Durch diese, wenn auch minimale Bewegung, erfährt der Lichtstrahl im Linsensystem 2.3 eine Ablenkung, welche vom Fotoelement 8 detektiert wird. Ausgelöst durch ein entsprechendes Signal des Fotoelements 8 sendet der Tastkopf ein Signal an ein stationäres Teil, welches an einem unbeweglichen Bauteil beispielsweise der Werkzeugmaschine fixiert ist. Von diesem stationären Teil wird das Signal an eine Elektronik, etwa in der Steuerung der Werkzeugmaschine weitergeleitet, wo die Position der Antastkugel 2.21 bestimmt wird und gleichzeitig die Maschine angehalten wird. Zur mechanischen Absicherung bzw. zum Schutz des Tastkopfs ist aber zusätzlich die Sollbruchstelle 2.22 im Taststift 2.2 vorgesehen. Es kann nämlich vorkommen, dass bei ungünstiger Geometrie des abzutastenden Körpers, aber auch bei zu hoher Verfahrgeschwindigkeit des Tastkopfs oder bei gestörter Signalübertragung, etc. eine übermäßige Auslenkung des Tastelements 2 droht. Bevor aber eine unzulässige Auslenkung eintreten würde, wird der Taststift 2.2 an der Sollbruchstelle 2.22 abbrechen.

Innerhalb des Bearbeitungsraumes einer Werkzeugmaschine kann der Tastkopf nicht nur in X- oder Y-Richtung verfahren werden, sondern auch in Richtung der Z-Achse, welche hier parallel zur Längsachse A des Tastelements 2 ausgerichtet ist. Wenn bei dieser Verfahrrichtung die Antastkugel 2.21 auf ein Hindernis bzw. Werkstück trifft, wird das Tastelement 2 entlang - bzw. parallel zu - der Längsachse A des Tastelements 2 aus der Ruheposition relativ zum Gehäuse 1 verschoben und die Feder 3 zusammengedrückt. Normalerweise löst diese Verschiebung einen Stopp der Verfahrbewegung aus. Aus verschiedensten Gründen kann es aber sein, dass dieser Stopp nicht, oder verspätet ausgelöst wird. Für diesen Fall ist ein mechanischer Anschlag in Z-Richtung bzw. in Richtung der Längsachse A des Tastelements 2 vorgesehen.

Wenn nun das Tastelement 2 aus seiner Ruheposition entlang der Längsachse A (gemäß deren Ausrichtung in der Ruheposition) verschoben wird, so werden zunächst die Anschlagflächen 2.11, 2.12 des Stifthalters 2.1 die Widerlagerfläche 1.11, 1.12 der Kappe 1.1 berühren. Wie oben beschrieben, ist diejenige Ausnehmung durch welche letztlich die Widerlagerfläche 1.13 gebildet wird tiefer als die beiden anderen entsprechenden Ausnehmungen in der Kappe 1.1. Bei weiterer Verschiebung des Tastelements 2 relativ zum Gehäuse 1 bzw. zur Kappe 1.1 in Z-Richtung wird die Längsachse A dann zunächst eine Schwenkbewegung beginnen und sich im weiteren Bewegungsablauf danach soweit neigen, bis auch die dritte Anschlagfläche 2.13 die entsprechenden Widerlagerfläche 1.13 berührt.

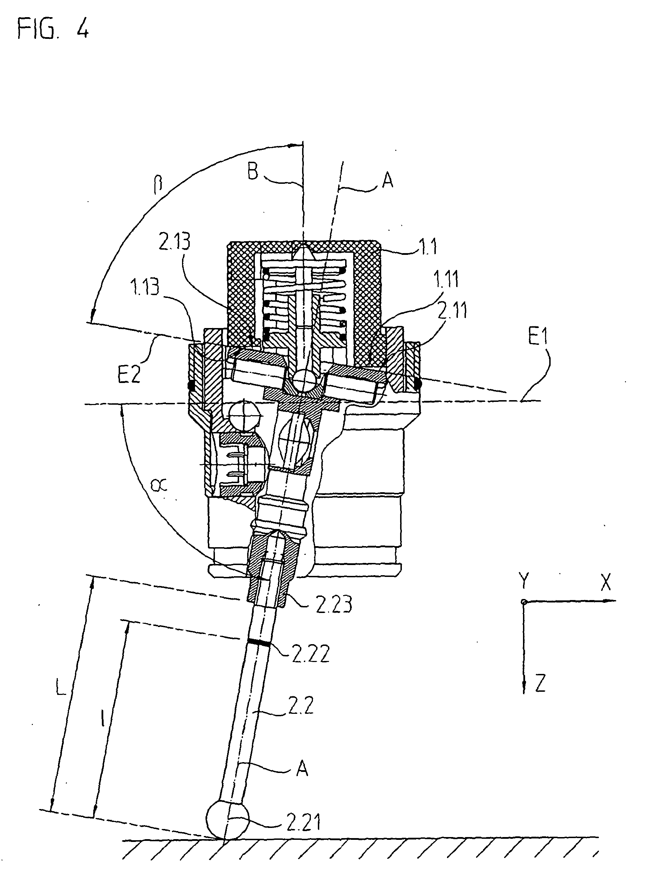

In der Figur 4 ist dieser Zustand, in dem sich das Tastelement 2 in der besagten Anschlagposition befindet dargestellt. In der Anschlagposition berühren die Anschlagflächen 2.11, 2.12, 2.13 des Tastelements 2 die Widerlagerflächen 1.11, 1.12, 1.13 an drei Anschlagpunkten bzw. Berührpunkten. Die Anschlagpunkte sind so angeordnet, bzw. kommen durch die Konfiguration der Anschlagflächen 2.11, 2.12, 2.13 und Widerlagerflächen 1.11, 1.12, 1.13 so zu liegen, dass nunmehr die Längsachse A die geometrische Ebene E1 in einem schiefen Winkel α schneidet. Die Ebene E1 ist, wie bereits beschrieben, eine Ebene, welche orthogonal zur Längsachse A des Tastelements 2 in der Ruheposition ausgerichtet ist.

Wenn die Anschlagflächen 2.11, 2.12, 2.13 und die Widerlagerflächen 1.11, 1.12, 1.13 extrem klein ausgeführt werden, können bei dieser Grenzbetrachtung die Anschlagflächen 2.11, 2.12, 2.13 und die Widerlagerflächen 1.11, 1.12, 1.13 den Anschlagpunkten gleichgesetzt werden.

Geometrisch betrachtet kann im vorgestellten Ausführungsbeispiel durch die Anschlagpunkte eine zweite Ebene E2 aufgespannt werden, bzw. es kann eine gedachte Ebene gebildet werden, auf welcher alle drei Anschlagpunkte zu liegen kommen. Wie aus den Figuren 1 b und 4 zu entnehmen ist, schneidet in der Ruheposition die Längsachse A des Tastelements 2 die nach obiger Definition gebildete Ebene E2 in einem schiefen Winkel β, einem Winkel, der also abweichend ist von einem rechten Winkel.

Auf diese Weise erfährt also das Tastelement 2 mit seinem Taststift 2.1 eine Schwenk- oder Neigungsbewegung, für den Fall, dass eine übermäßige Verfahrbewegung in Z-Richtung erfolgt, wenn die Antastkugel 2.21 bereits in Kontakt mit einem Werkstück ist. Die Längsachse B des Gehäuses 1 fällt nunmehr in der Anschlagposition des Tastelements 2 nicht mehr mit der Längsachse A des Tastelements 2 zusammen. Die Längsachse B des Gehäuses 1 ist jedoch in der Ruheposition parallel zur Längsachse A des Tastelements 2 ausgerichtet, im vorgestellten Ausführungsbeispiel sind die beiden Achsen sogar deckungsgleich, während in der Anschlagposition die Längsachse A des Tastelements 2 relativ zur Längsachse B des Gehäuses 1 geschwenkt ist.

Durch die Neigung bzw. Schwenkung des Taststifts 2.1 wird dieser nicht mehr auf Knickung beansprucht, sondern es wird eine Biegebeanspruchung in den Taststift 2.1 eingeleitet. Die Sollbruchstelle 2.22 ist für derartige Biegebeanspruchungen ohnehin ausgelegt, da durch diese übermäßige Belastungen abgefangen werden Sollen, wenn eine Verfahrbewegung in X-Richtung (ebenso wie in Y-Richtung) erfolgt.

Nicht selten sind die Reibungsverhältnisse aber auch derart ausgebildet, dass zwischen der Antastkugel 2.21 und der Werkstückoberfläche keine relative Verschiebung auftreten kann und somit auch keine ausgeprägte Schwenkbewegung des Tastelements 2 erfolgt. Aber auch in diesem Fall entfaltet die Erfindung ihre Wirkung, weil sich nämlich zumindest einer der Anschlagflächen 2.11, 2.12, 2.13 des Stifthalters 2.1 in diesem Zustand nicht am Gehäuse abstützen wird, so dass die Knickbelastung auf den Taststift 2.2 und damit auch auf die Sollbruchstelle 2.22 gegenüber vorbekannten Systemen erhöht wird.

Wie in der Figur 4 gezeigt, ist die Sollbruchstelle 2.22 im oberen Bereich des Taststifts 2.1 vorgesehen, das heißt, dass der Abstand zwischen Sollbruchstelle 2.22 und Antastkugel 2.21 größer ist als der Abstand zwischen Sollbruchstelle 2.22 und der Schraubverbindung 2.23. Zur Veranschaulichung dieses Sachverhaltes ist in der Figur 4 die freie Länge L des Taststifts 2.2 eingezeichnet. Unter freier Länge L ist demnach diejenige Länge des Taststifts 2.2 zu verstehen, die sich zwischen der Einspannung, hier die Schraubverbindung 2.23, und dem Taststiftende, hier die Antastkugel 2.21, erstreckt. In der Figur 4 wird der Abstand der Sollbruchstelle 2.22 von der Antastkugel 2.21 mit der Größe I dargestellt. Wie aus der Figur 4 zu entnehmen ist, ist der Abstand der Sollbruchstelle 2.22 vom Tastende, bzw. von der Antastkugel 2.21 wesentlich größer als die halbe freie Länge L und sogar größer als 2/3 der freien Länge L. Dies hat den Vorteil, dass dadurch die Sollbruchstelle 2.22 in einen Bereich mit hoher mechanischer Beanspruchung gelegt ist. Bezogen auf das gesamte Tastelement 2 ist es vorteilhaft, wenn die Sollbruchstelle 2.22 etwa in dessen Mitte zu liegen kommt, wobei sich der Begriff Mitte hier auf dessen Erstreckung in der Längsachse A bezieht.

Alternativ zum vorgestellten Ausführungsbeispiel kann der Stifthalter 2.2 auch derart ausgebildet sein, dass die Ebene E3 in der die Anschlagflächen oder die Anschlagpunkte zu liegen kommen nicht orthogonal zur Längsachse A angeordnet ist (γ ≠ 90°). Bei dieser Ausgestaltung der Erfindung können dann die Widerlagerpunkte am Gehäuse entweder in einer Ebene liegen, die orthogonal zur Längsachse A (bezogen auf die Ausrichtung in der Ruheposition) ausgerichtet ist, oder es kann hier eine Anordnung gewählt werden, bei der auch die Ebene der Widerlagerpunkte schräg zur Längsachse A (bezogen auf die Ausrichtung in der Ruheposition) im Raum liegt. Maßgeblich ist, das die Anschlagpunkte räumlich so angeordnet sind, dass in der Anschlagposition die Längsachse A die geometrische Ebene E1, die in der Ruheposition gebildet wird, in einem schiefen Winkel α schneidet. Im alternativen Ausführungsbeispiel erfolgt auch eine Neigung oder eine Schwenkbewegung des Tastelements 2, wenn dieses in Z-Richtung in eine Anschlagposition verfahren wird.

## Patentansprüche

1. Tastkopf umfassend
· ein Gehäuse (1),
· ein Tastelement (2), welches eine Längsachse (A) und Anschlagflächen (2.11, 2.12, 2.13) aufweist, und welches aus einer Ruheposition entlang der Längsachse (A) in eine Anschlagposition relativ zum Gehäuse (1) verschiebbar ist,
· Widerlagerflächen (1.11, 1.12, 1.13), welche relativ zum Gehäuse (1) ortsfest angeordnet sind, wobei
in der Anschlagposition zur Wegbegrenzung des Tastelements (2) die Anschlagflächen (2.11, 2.12, 2.13) des Tastelements (2) die Widerlagerflächen (1.11, 1.12, 1.13) an Anschlagpunkten berühren, und
in der Ruheposition eine geometrische Ebene (E1) orthogonal zur Längsachse (A) des Tastelements (2) aufspannbar ist,
**dadurch gekennzeichnet, dass**
die Anschlagpunkte so angeordnet sind, dass in der Anschlagposition die Längsachse (A) die geometrische Ebene (E1) in einem schiefen Winkel (α) schneidet.

2. Tastkopf gemäß dem Anspruch 1, **dadurch gekennzeichnet, dass** das Gehäuse (1) eine Längsachse (B) aufweist, wobei die Längsachse (B) des Gehäuses (1) in der Ruheposition parallel zur Längsachse (A) des Tastelements (2) ausgerichtet ist, und die Längsachse (A) des Tastelements (2) in der Anschlagposition relativ zur Längsachse (B) des Gehäuses (1) geschwenkt ist.

3. Tastkopf gemäß einem der vorhergehenden Ansprüche, **dadurch gekennzeichnet, dass** das Tastelement (2) einen Taststifthalter (2.1) und einen am Taststifthalter (2.1) lösbar befestigten Taststift (2.2) umfasst.

4. Tastkopf gemäß einem der vorhergehenden Ansprüche, d**adurch gekennzeichnet, dass** das Tastelement (2) eine Sollbruchstelle (2.22) aufweist.

5. Tastkopf gemäß dem Anspruch 3 und Anspruch 4, **dadurch gekennzeichnet, dass** der Taststift (2.2) mit einer freien Länge (L) ein Taststiftende (2.21) aufweist, und der Abstand (I) der Sollbruchstelle (2.22) vom Tastende (2.21) größer ist als die halbe freie Länge (L), insbesondere größer ist als 2/3 der freien Länge (L).

6. Tastkopf gemäß einem der vorhergehenden Ansprüche, **dadurch gekennzeichnet, dass** eine Auslenkung des Tastelements (2) aus seiner Ruheposition durch eine optisch wirkende Vorrichtung festgestellt wird.

7. Tastkopf gemäß dem Anspruch 3 und 6, **dadurch gekennzeichnet, dass** am Taststifthalter (2.1) ein Linsensystem (2.1) befestigt ist.

8. Tastkopf gemäß einem der vorhergehenden Ansprüche, **dadurch gekennzeichnet, dass** durch die Anschlagpunkte eine zweite geometrische Ebene (E2) aufspannbar ist, und die Anschlagpunkte so angeordnet sind, dass in der Ruheposition des Tastelements (2) dessen Längsachse (A) die geometrische Ebene (E2) in einem schiefen Winkel (β) schneidet.

9. Tastkopf gemäß einem der vorhergehenden Ansprüche, **dadurch gekennzeichnet, dass** durch die Anschlagpunkte auf den Anschlagflächen (2.11, 2.12, 2.13) des Tastelements (2) eine geometrische Ebene (E3) aufspannbar ist, und Längsachse (A) die zweite geometrische Ebene (E3) in einem rechten Winkel (γ) schneidet.

## Claims

1. Probe head comprising
- a housing (1),
- a probe element (2) which has a longitudinal axis (A) and stop faces (2.11, 2.12, 2.13) and which is displaceable from an inoperative position along the longitudinal axis (A) into a stop position relative to the housing (1),
- abutment faces (1.11, 1.12, 1.13) which are disposed in a stationary manner relative to the housing (1), wherein
the stop faces (2.11, 2.12, 2.13) of the probe element (2), in the stop position for path delimitation of the probe element (2), contact the abutment faces (1.11, 1.12, 1.13) at stop points, and a geometric plane (E1) can extend in the inoperative position orthogonally to the longitudinal axis (A) of the probe element (2),
**characterised in that**
the stop points are disposed such that the longitudinal axis (A), in the stop position, intersects the geometric plane (E1) at an oblique angle (α).

2. Probe head according to claim 1, **characterised in that** the housing (1) has a longitudinal axis (B), the longitudinal axis (B) of the housing (1) being orientated in the inoperative position parallel to the longitudinal axis (A) of the probe element (2), and the longitudinal axis (A) of the probe element (2), in the stop position, being pivoted relative to the longitudinal axis (B) of the housing (1).

3. Probe head according to one of the preceding claims, **characterised in that** the probe element (2) includes a tracer pin holder (2.1) and a tracer pin (2.2) which is mounted detachably on the tracer pin holder (2.1).

4. Probe head according to one of the preceding claims, **characterised in that** the probe element (2) has a predetermined breaking point (2.22).

5. Probe head according to claim 3 and claim 4, **characterised in that** the tracer pin (2.2) with a free length (L) has a tracer pin end (2.21), and the spacing (1) of the predetermined breaking point (2.22) from the probe end (2.21) is greater than half the free length (L), in particular is greater than 2/3 of the free length (L).

6. Probe head according to one of the preceding claims, **characterised in that** a deflection of the probe element (2) from its inoperative position is established by an optically acting device.

7. Probe head according to claim 3 and 6, **characterised in that** a lens system (2.1) is mounted on the tracer pin holder (2.1).

8. Probe head according to one of the preceding claims, **characterised in that** a second geometric plane (E2) can extend through the stop points, and the stop points are disposed such that the longitudinal axis (A) thereof intersects the geometric plane (E2) in the inoperative position of the probe element (2) at an oblique angle (β).

9. Probe head according to one of the preceding claims, **characterised in that** a geometric plane (E3) can extend through the stop points on the stop faces (2.11, 2.12, 2.13) of the probe element (2), and the longitudinal axis (A) intersects the second geometric plane (E3) at a right angle (γ).

## Revendications

1. Tête de palpage comprenant:
- un boîtier (1)
- un élément palpeur (2) qui présente un axe longitudinal (A) ainsi que des surfaces de butée (2.11, 2.12. 2.13) et peut coulisser suivant l'axe (A) depuis une position de repos jusqu'à une position de butée par rapport au boîtier (1),
- des surfaces formant contre-butée (1.11, 1.12, 1.13) qui sont fixes par rapport au boîtier (1),
les surfaces de butée (2.1, 2.12, 2.13) de l'élément palpeur (2), dans la position de butée qui limite la course de l'élément palpeur (2), étant en contact avec les surfaces de contre-butée (1.11, 1.12, 1.13) en des points de butée et
dans la position de repos, un plan géométrique (E1) pouvant être tendu perpendiculairement à l'axe longitudinal (A) de l'élément palpeur (2),
**caractérisée par le fait que** les points de butée sont disposés de manière telle que, dans la position de butée, l'axe longitudinal (A) coupe le plan géométrique (E1) sous un angle oblique (α).

2. Tête de palpage selon la revendication 1 , **caractérisée par le fait que** le boîtier (1) présente un axe longitudinal (B), l'axe longitudinal (B) du boîtier (1), dans la position de repos, étant parallèle à l'axe longitudinal (A) de l'élément palpeur (2) et l'axe longitudinal (A) de l'élément palpeur (22), dans la position de butée, étant incliné par rapport à l'axe longitudinal (B) du boîtier (1).

3. Tête de palpage selon une des revendications précédentes, **caractérisée par le fait que** l'élément palpeur (2) comprend un porté-doigt de palpage (2.1) et un doigt de paplage (2.2) fixé de manière séparable audit porte-doigt de palpage (2.1).

4. Tête de palpage selon une des revendications précédentes, **caractérisée par le fait que** l'élément palpeur (2) comporte une zone de rupture (2.22).

5. Tête de palpage selon une des revendications précédentes, **caractérisée par le fait que** le doigt de palpage (2.2) ayant une longueur libre (L) présente une extrémité de palpage (2.21) et que la distance (I) de la zone de rupture (2.22) à l'extrémité de palpage (2.21) est supérieure à la demi longueur libre (L), plus particulièrement est supérieure à 2/3 de la longueur libre (L).

6. Tête de palpage selon une des revendications précédentes, **caractérisée par le fait qu'**un déplacement de l'élément palpeur (2) depuis sa position de repos est détecté au moyen d'un dispositif optique.

7. Tête de palpage selon les revendications 3 et 6, **caractérisée par le fait qu'**un système de lentilles(2.1) est fixé au porte-doigt de palpage (2.1).

8. Tête de palpage selon une des revendications précédentes, **caractérisée par le fait qu'**un second plan géométrique (E2) peut être tendu entre les points de butée et que les points de butée sont disposés de manière telle que, dans la position de repos de l'élément palpeur (2), l'axe longitudinal (A) de dernier coupe le plan géométrique (E2) suivant un angle oblique (β).

9. Tête de palpage selon une des revendications précédentes, **caractérisée par le fait qu'**un plan géométrique (E3) peut être tendu entre les points de butée de l'élément palpeur (2) sur les surfaces de butée (2.11, 2.12, 2.13) et que l'axe longitudinal (A) de dernier coupe le second plan géométrique (E3) suivant un angle droit (γ).
